Europäisches Patentamt

European Patent Office

Office européen des brevets

(11) Numéro de publication : **0 032 139
B1**

## (12) FASCICULE DE BREVET EUROPÉEN

(45) Date de publication du fascicule du brevet :
24.04.85

(21) Numéro de dépôt : **81400014.7**

(22) Date de dépôt : **08.01.81**

(51) Int. Cl.⁴ : **H 05 B 3/26, B 60 R 1/06**

(54) **Vitrage chauffant et dispositif de fabrication.**

(30) Priorité : **08.01.80 FR 8000278**

(43) Date de publication de la demande :
**15.07.81 Bulletin 81/28**

(45) Mention de la délivrance du brevet :
**24.04.85 Bulletin 85/17**

(84) Etats contractants désignés :
**BE DE GB IT LU NL SE**

(56) Documents cités :
**FR-A- 846 195
FR-A- 1 464 585
US-A- 3 392 759
US-A- 3 874 330**

(73) Titulaire : **SAINT-GOBAIN VITRAGE
Les Miroirs 18, avenue d'Alsace
F-92400 Courbevoie (FR)**

(72) Inventeur : **Dran, Maurice
11, rue de l'armorique
F-75015 Paris (FR)**
Inventeur : **Jamet, Bernard
9, rue Jean Jaurès
F-45600 Sully sur Loire (FR)**

(74) Mandataire : **Eudes, Marcel et al
Saint-Gobain Recherche 39 Quai Lucien Lefranc
F-93304 Aubervilliers Cedex (FR)**

EP 0 032 139 B1

## Description

La présente invention concerne un vitrage chauffant monolithe ou feuilleté comprenant un réseau chauffant de fils fins de résistance électrique incrustés dans une couche thermoplastique.

L'invention concerne encore un dispositif pour fabriquer ce nouveau vitrage chauffant.

Il est connu d'utiliser des vitrages chauffants du type décrit ci-dessus pour équiper des véhicules de transport aérien, maritime ou terrestre. Ces vitrages sont notamment utilisés comme pare-brise d'avions, de bateaux, d'automobiles, de trains par exemple. Ils comprennent un réseau formé de fils métalliques fins posés en parallèle entre deux bandes collectrices (ou collecteurs) reliées à une source de tension électrique extérieure au vitrage. Ces conducteurs tendus en ligne droite ou repliés en segments à directrices rectilignes sont le plus souvent ondulés ou frisés le long de ces directrices rectilignes de façon à mieux répartir la dissipation de chaleur, à réduire l'importance des phénomènes de diffraction optique provoqués par la présence du réseau, comme à augmenter la longueur de fil à distance entre collecteurs donnée.

La tension électrique, le diamètre du fil, sa longueur et l'écartement entre fils sont déterminés pour obtenir une puissance spécifique, exprimée en watts par décimètres carrés, d'environ 2 W/dm² à 70 W/dm² selon l'utilisation du vitrage. Ainsi, par exemple, lorsque le vitrage est utilisé comme lunette arrière chauffante ou pare-brise chauffant dans les automobiles ou les trains, la puissance spécifique varie généralement entre 3 et 10 W/dm². Dans les transports maritimes, ces vitrages chauffants présentent généralement une puissance spécifique de 10 à 20 W/dm² environ alors que dans l'aviation cette puissance spécifique peut varier de 15 à 70 W/dm² environ.

Lorsque le véhicule n'est pas limité en puissance électrique, la totalité du pare-brise peut être chauffée pour éviter la formation de givre et de buée ; le chauffage garantit donc en particulier le fonctionnement correct des essuie-glaces.

Mais généralement, les véhicules, notamment les petits avions, les hélicoptères, les petits bateaux sont limités en puissance électrique ; on est alors conduit à ne chauffer qu'une partie du vitrage.

Or, selon l'art connu, les fils de résistance sont disposés, comme déjà indiqué, suivant des directrices rectilignes généralement parallèles. Le document US-A-3 392 759 décrit un dispositif pour fabriquer un tel réseau à directrices rectilignes. Seules les bandes collectrices peuvent le cas échéant être courbes.

En outre, leur largeur conduit à les placer sur les bords du vitrage pour ne pas gêner la vision. Pour leur part, les essuie-glaces ont des mouvements de rotation ou de translation circulaire.

De ce fait, il est impossible de suivre entièrement le contour de la surface qu'ils balaient et, à moins de pouvoir chauffer une zone qui déborde largement la surface en question, ce qui exige tout de même une puissance électrique importante, on est conduit à ne chauffer qu'une zone qui s'inscrit par endroit à l'intérieur de la surface balayée par l'essuie-glace. La zone de visibilité se trouve alors très réduite en cas de pluie et l'essuie-glace risque sinon de rester prisonnier au démarrage, du moins de subir une usure rapide et de voir son fonctionnement très perturbé en cas de givre, sur la partie de la surface balayée par lui qui n'est pas chauffée.

On connaît d'après les documents US-A-3 874 330 et FR-A-1 464 585 d'autres types de vitrages chauffants, dans lesquels les bandes de résistance sont constituées de pâte d'argent déposée par sérigraphie. Ces bandes présentent des épaisseurs d'environ 0,6 à 0,8 mm et sont par conséquent très visibles, ce qui exclut l'utilisation de ces vitrages comme pare-brise de véhicule à moteur.

L'invention obvie aux inconvénients cités et propose de créer un réseau chauffant à performance chauffante optimale, formé de fils métalliques très fins incrustés dans une couche thermoplastique suivant des directrices en arc de cercle.

Le vitrage selon l'invention peut être fabriqué à l'aide des fils fins métalliques couramment utilisés dans la fabrication de ce type de vitrage. On peut utiliser des fils en tungstène, ferro-nickel, cuivre noircis, dont le diamètre peut varier de 15 à 30 microns environ, ces fils étant frisés ou ondulés de part et d'autre de chaque directrice. Les écartements entre les directrices des fils iront d'environ 0,5 à 3 mm selon l'utilisation du vitrage, les différents paramètres étant choisis comme dans la technique courante en fonction de la puissance spécifique à atteindre.

Suivant une réalisation de l'invention, le réseau chauffant à fils électriques ayant des directrices en arc de cercle couvre une surface égale ou très proche de la surface du vitrage balayée par un essuie-glace.

Cette dernière constitue une bande circulaire, par exemple un secteur d'une couronne circulaire délimité par deux rayons ou encore une surface à au moins deux côtés courbes de forme très variable, ceci en relation avec le type d'essuie-glace et son fonctionnement.

Ainsi, suivant l'invention, on peut chauffer toute la surface la plus utile du vitrage mais pratiquement elle seule, d'où une économie de puissance.

Pour des facilités de mise en œuvre les fils sont de préférence disposés suivant des directrices en arc de cercle de même rayon décalées de proche en proche.

Dans une réalisation du vitrage, toutes les directrices des fils formant le réseau appartiennent donc à des arcs de cercle de même rayon obtenus par translation.

Dans une variante, les directrices des fils formant le réseau appartiennent à des arcs de cercle de même centre mais de rayons différents.

Lorsque le réseau chauffant est formé de fils disposés suivant des directrices en arcs de cercle directement le long d'elles, il peut couvrir une surface de forme très variée.

Ainsi, il peut couvrir une surface en forme de secteur circulaire d'angle au centre quelconque et avec des directrices de fils à faible rayon d'arc de cercle. De même, le réseau peut avoir une surface de forme très variée lorsqu'il est formé de fils frisés ou ondulés autour des directrices courbes. Cependant lorsque les directrices des fils ont un faible rayon d'arc de cercle et lorsque elles sont très rapprochées les unes des autres, l'amplitude des ondulations doit être suffisamment faible afin d'éviter des perturbations de chauffage. Il en est de même lorsque l'angle au centre du secteur couvert par le réseau est trop important.

L'invention propose également un dispositif pour la fabrication d'un réseau chauffant formé de fils fins disposés suivant des directrices en arc de cercle.

Le dispositif selon l'invention peut comprendre certains organes des dispositifs connus les plus utilisés pour la fabrication de vitrages chauffants à réseau formé de fils fins déposés le long des directrices rectilignes.

Un tel dispositif est décrit par exemple dans la publication de brevet français 1 565 953. Ce dispositif connu de la technique comprend un plateau horizontal supportant la feuille thermoplastique sur laquelle doit être incrusté le réseau électrique, plateau associé à un pont disposé au-dessus de lui, perpendiculairement à l'un de ses axes sur lequel coulisse suivant un mouvement de va-et-vient un chariot porteur d'organes de pose. Ceux-ci sont constitués, de façon connue, d'une tête chauffante terminée par un guide fil pour incruster le fil sur la feuille thermoplastique, et par un pied de biche rappelé élastiquement vers le plateau pour s'appliquer contre la surface de la feuille ; solidaire de la tête chauffante, ce pied de biche maintient celle-ci à une distance constante de cette surface. A chaque arrêt du mouvement de va-et-vient du chariot, les organes de pose pivotent à 180 °C en même temps qu'un mécanisme d'avance pas à pas du plateau décale celui-ci du chariot de la distance séparant deux fils consécutifs, dans le sens de l'axe du réseau qui n'est autre que l'axe du plateau précité.

Pour former un réseau de fils ondulés, les organes de pose sont en outre animés d'une oscillation rapide, de faible amplitude, perpendiculaire au va-et-vient du chariot, au moyen d'un excentrique mû par une crémaillère disposée le long du pont.

Le dispositif selon l'invention, comprend en outre des moyens permettant la pose du fil le long de directrices courbes, notamment en arc de cercle et un mécanisme d'avance pas à pas décalant le chariot et le plateau l'un par rapport à l'autre.

Suivant une forme de réalisation du dispositif selon l'invention, celui-ci comprend non pas un pont rectiligne mais un pont cintré suivant un arc de cercle dans un plan parallèle à la surface du plateau.

Ce dispositif permet la fabrication d'un vitrage à réseau chauffant formé de fils dont les directrices ont toutes la forme d'un même arc de cercle qui peut être un arc de cercle décrit par l'essuie-glace équipant le vitrage. Cependant cette réalisation n'est pas entièrement satisfaisante à plusieurs égards, par son coût, son manque de souplesse d'emploi, la déformation excessive des ondulations du réseau sur les bords.

Suivant une variante de réalisation préférée du dispositif, celui-ci comprend un pont rectiligne comme dans l'art connu, mais à la place d'être fixe, il est monté librement à chacune de ses extrémités sur des glissières parallèles entre elles, orientées parallèlement à l'axe précité du plateau ; le chariot portant les organes de pose et coulissant sur le pont est fixé par l'intermédiaire d'une bielle à un axe vertical situé dans le plan médian du plateau supportant la feuille thermoplastique.

Durant son mouvement de va-et-vient le long du pont, le chariot, guidé ainsi en translation par le pont, décrit alors une trajectoire en arc de cercle de rayon égal à la longueur de la bielle le reliant au point fixe. Ce dispositif permet la réalisation d'un réseau de fils dont les directrices sont des arcs de cercle.

En décalant les positions respectives de l'axe de rotation de la bielle et du plateau, on peut exécuter un réseau constitué de fils suivant des directrices de rayon constant mais décalées, à chaque inversion de la course du chariot, de l'espacement voulu entre fils.

En modifiant la longueur de la bielle, on modifie également la longueur de l'arc de cercle décrit par le chariot et par là on peut exécuter des réseaux différents constitués de fils suivant des directrices de rayon constant mais différents d'un réseau à l'autre.

En modifiant progressivement la longueur de la bielle tout en maintenant le plateau fixe, on peut encore exécuter des réseaux formés de fils suivant des directrices concentriques de rayons progressivement variables, si l'on opère à chaque inversion de la course du chariot en diminuant par exemple la longueur de la bielle d'une distance correspondant à l'écartement entre deux fils.

Selon une variante de réalisation, le dispositif comprend un mécanisme d'avance pas à pas du plateau et en outre un mécanisme susceptible de régler la longueur de la bielle à chaque va-et-vient du chariot.

D'autres avantages et caractéristiques de l'invention apparaîtront par la suite dans la description d'exemples de réalisation de l'invention en relation avec les figures.

La figure 1 représente un vitrage chauffant classique équipé d'un réseau chauffant formé de fils à directrices rectilignes.

La figure 2 représente un autre vitrage chauffant classique.

Les figures 3 à 6 représentent des vitrages chauffants équipés selon l'invention de réseaux chauffants formés de fils dont les directrices sont en arcs de cercle.

La figure 7 représente un dispositif avantageux pour la réalisation de vitrages chauffants selon l'invention.

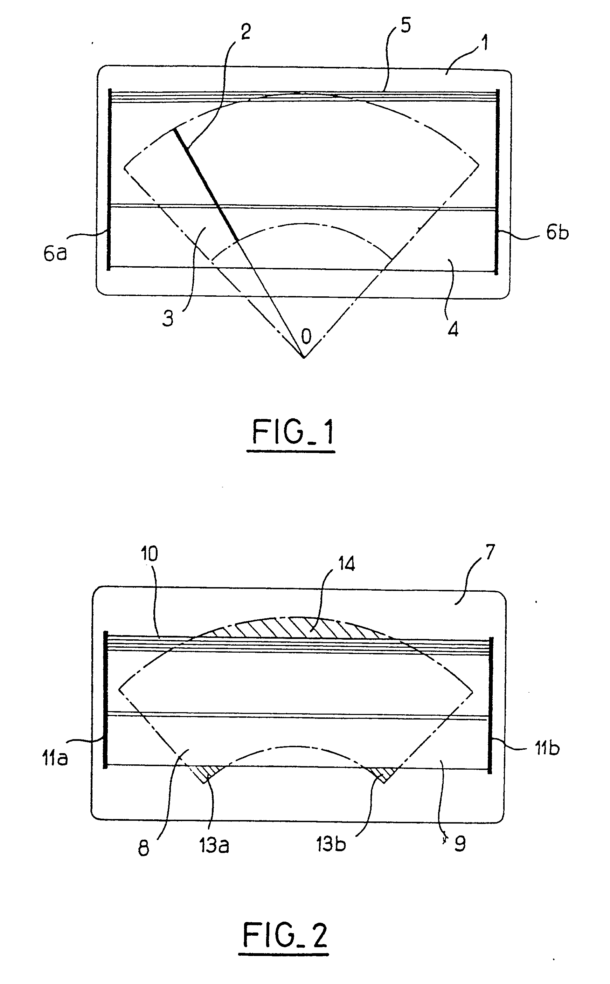

La figure 1 représente un vitrage feuilleté 1 équipé d'un essuie-glace 2 balayant en rotation autour d'un axe 0 une surface 3 figurée en trait mixte. Il s'agit d'un vitrage feuilleté comprenant une feuillle intercalaire sur laquelle est incrusté un réseau chauffant rectangulaire 4 de fils fins de résistance électrique disposés suivant des directrices rectilignes 5 entre deux bandes collectrices 6a et 6b. En raison de l'échelle, les ondulations des fils ne sont pas figurées.

Dans ce vitrage, le réseau chauffant couvre une zone circonscrite à la surface 3. Il couvre donc une surface importante dont une partie sera chauffée en vain en cas de pluie et il absorbera une forte puissance électrique.

La figure 2 représente un vitrage feuilleté 7 dont l'essuie-glace balaie en rotation une surface 8. Ce vitrage comprend également un réseau chauffant 9 de fils fins disposés suivant des directrices rectilignes 10 entre deux bandes collectrices 11a et 11b.

Le réseau chauffant couvre une zone d'étendue restreinte, plus facile à chauffer mais n'interceptant qu'une partie de la surface 8. Les zones chauffées en vain sont réduites mais les parties hachurées 13a, 13b et 14 resteront givrés malgré le fonctionnement du chauffage ; il s'ensuit que l'essuie-glace fonctionne de façon incorrecte.

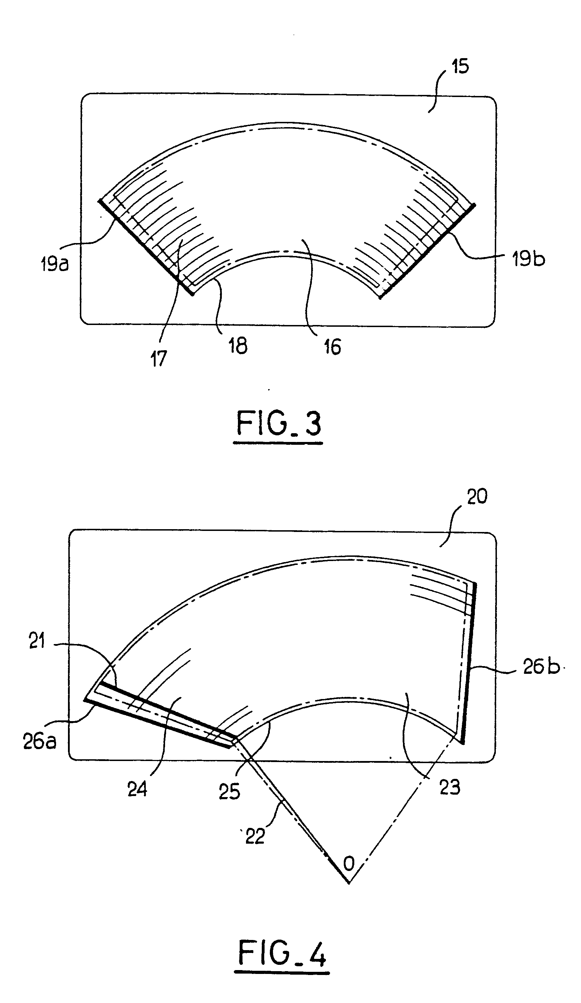

La figure 3 représente un vitrage 15, muni d'un essuie-glace qui balaie en rotation une surface 16 et qui, selon l'invention comprend une feuille sur laquelle est incrustée un réseau chauffant 17 de fils fins de résistance électrique disposés suivant des directrices en arc de cercle concentriques et de rayons variables entre deux bandes collectrices 19a et 19b.

Les fils représentés le long des directrices sur la figure peuvent être avantageusement frisés ou ondulés autour de celle-ci pour les raisons déjà invoquées précédemment.

Le réseau chauffant recouvre entièrement et quasi-exactement la surface 16 balayée par l'essuie-glace. Le fonctionnement du réseau chauffant est optimal car il chauffe toute la surface utile et elle seule, donc au prix d'un minimum de puissance électrique.

La figure 4 représente un vitrage 20 muni d'un essuie-glace dont le balai 21 est légèrement incliné par rapport au manche 22. Cet essuie-glace balaie une surface 23 différente d'un secteur de couronne circulaire. Selon l'invention, ce vitrage comprend une feuille sur laquelle est incrusté un réseau chauffant 24 de fils fins de résistance électrique disposés suivant des directrices 25 en arcs de cercle concentriques et de rayon variables entre deux bandes des collectrices 26a et 26b. Ici encore, le réseau chauffant recouvre entièrement et exactement la surface 23 balayée par l'essuie-glace.

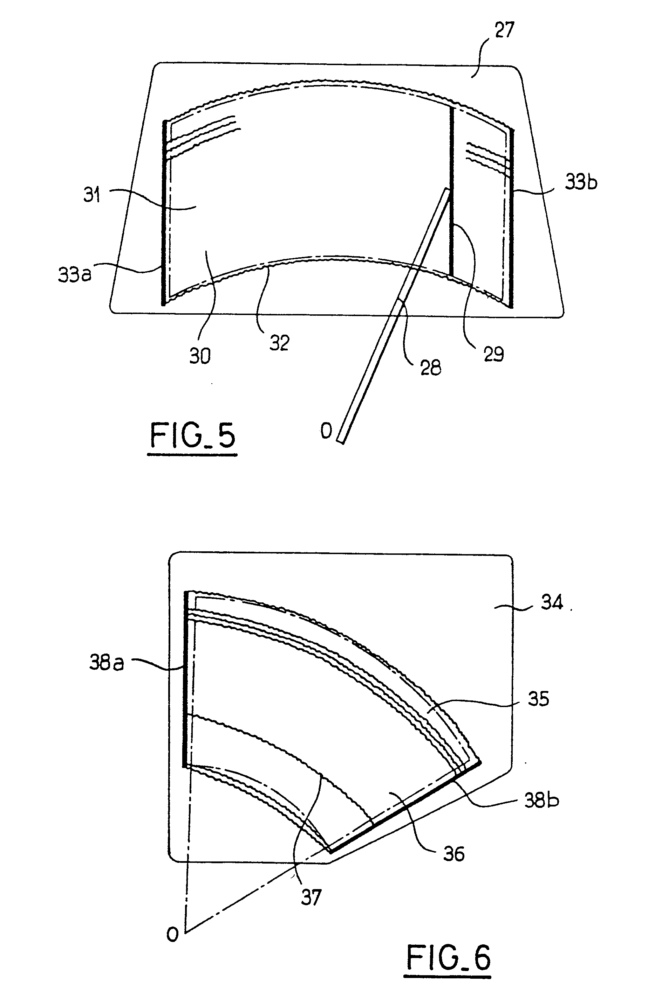

La figure 5 représente un vitrage 27 muni d'un essuie-glace 28 dont le balai 29 se déplace d'un mouvement de translation circulaire couvrant une surface 30. Les fils du réseau chauffant 31 selon l'invention sont posés ici selon des directrices 32 de rayon constant entre les bandes collectrices 33a et 33b, en brins successifs décalés d'une quantité constante.

La figure 6 représente un vitrage feuilleté 34 muni d'un essuie-glace qui balaie une surface 35, vitrage qui, selon l'invention, comprend une feuille intercalaire sur laquelle est incrusté un réseau chauffant 36 de fils fins ondulés de résistance électrique disposés suivant des directrices 37 en arcs de cercle de même rayon, entre deux bandes collectrices 38a et 38b.

Ici encore, le réseau chauffant couvre entièrement la zone balayée par l'essuie-glace. Les rayons maximum et minimum décrits par l'essuie-glace sont respectivement de 30 et 60 centimètres environ autour d'un point 0. Son angle de balayage et celui formé par les deux bandes collectrices sont d'environ 70 degrés, mais le rayon des arcs de cercle des directrices est de 70 centimètres environ et l'angle d'ouverture de leurs arcs de pose est ainsi réduit à 60 degrés dans leur partie la plus large.

Les directrices des fils sont équidistantes de 1 mm.

L'amplitude des ondulations est telle que la longueur de fil pour 1 mètre de directrice est de 1,20 m. On dit encore que le facteur d'ondulation est de 1,2. Le fil est un fil en tungstène de 15 μm de diamètre, d'environ 400 Ω de résistance par mètre linéaire.

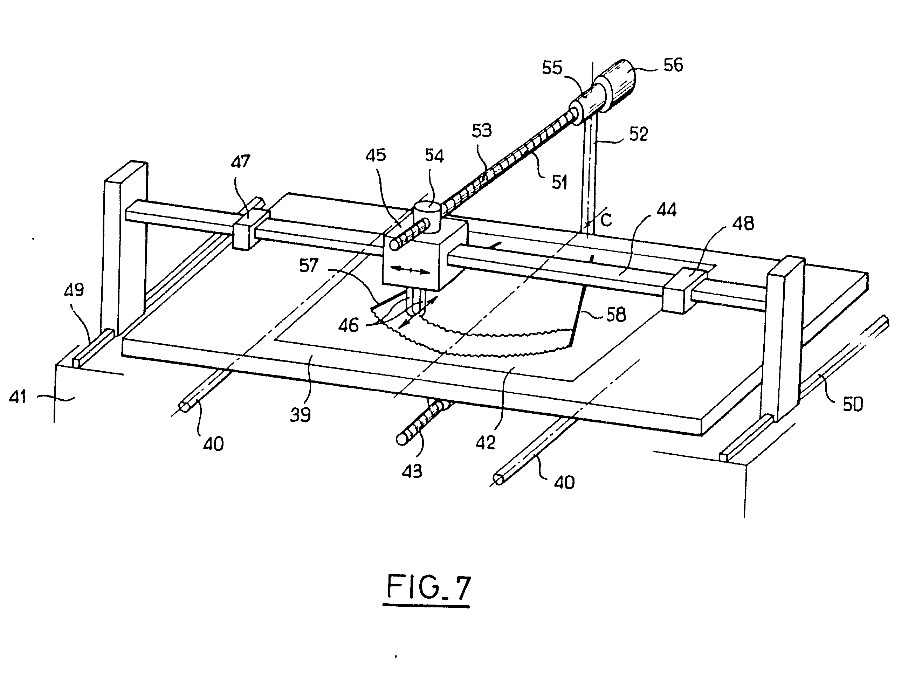

La figure 7 représente schématiquement un dispositif permettant la fabrication des vitrages chauffants et plus précisément de leurs réseaux chauffants.

Ce dispositif comprend un plateau 39 monté sur des glissières 40 solidaires d'un bâti 41, plateau qui supporte la feuille thermoplastique 42 généralement en polyvinylbutyral, et qui, muni de moyens d'entraînement, est animé par l'intermédiaire d'une vis-mère 43, d'un mouvement d'avance pas à pas réglable. Au-dessus du plateau, et disposé perpendiculairement aux glissières, un pont rectiligne et horizontal 44 supporte un chariot coulissant 45, portant lui-même les organes 46 de pose du fil sur la feuille thermoplastique.

Les organes de pose de fil, de type classique, sont montés élastiquement sur un axe vertical et munis d'un système d'excentrique entraîné par une crémaillère disposée le long du pont (non représentés) leur imposant, perpendiculairement au mouvement de va-et-vient du chariot, un mouvement d'oscillation de pas et d'amplitude faibles et réglables, de sorte que le fil est déposé sensiblement sous forme d'un sinusoïde.

Chaque course du chariot est réglée par deux butées latérales 47 et 48 montées coulissantes sur le pont et provoquant le retournement des organes de pose.

Selon l'invention, le pont est monté librement sur deux glissières (49, 50) solidaires du bâti, disposées de part et d'autre du plateau suivant sa direction d'avance. Le chariot coulissant est en outre relié par une bielle 51 à un axe vertical 52 disposé dans le plan médian du plateau et solidaire du bâti 41.

La bielle est formée d'un axe fileté 53 monté vissant sur le pivot 54 et commandé en rotation dans son palier 55 solidaire de l'axe 52 par un moteur pas-à-pas 56 qui permet ainsi de modifier la longueur utile de la bielle par une action analogue à celle de la vis-mère sur le plateau.

Le dispositif fonctionne de la façon suivante :

On dispose la feuille thermoplastique sur le plateau de façon que l'axe du futur réseau et celui du plateau coïncident. On dépose les deux bandes collectrices 57 et 58 aux emplacements désirés sur la feuille thermoplastique.

On place le chariot 45 porteur des organes de pose au-dessus d'une extrémité d'une bande collectrice puis, ces organes étant mis en place, on le fait coulisser suivant un mouvement de va-et-vient le long du pont 44, en même temps que la bielle 51 provoque le déplacement de celui-ci sur ses glissières 49 et 50 et que la crémaillère anime les organes de pose d'un mouvement transversal. Durant son mouvement, le chariot décrit une trajectoire en arc de cercle de centre correspondant au point 0, de rayon égal à celui de la bielle et délimité par les butées dont on modifiera la position au fur et à mesure des passages successifs. Le fil est ainsi déposé selon une courbe d'allure sinusoïdale, de pas transversal constant. Après chaque va-et-vient du chariot, une rotation de la vis-mère 43 fait avancer le plateau 39 d'une distance égale à l'écartement entre les directrices de deux brins voisins.

Les organes de pose pivotent de 180° à chaque bout de course ; le mouvement s'inverse et le brin suivant est posé le long d'une directrice de même rayon, décalée de l'écartement voulu selon un arc dont la longueur peut être réglée à volonté.

Lorsque le réseau de fils est réalisé, on recouvre éventuellement les extrémités des fils et les deux bandes déposées initialement par deux bandes collectrices identiques. Les fils sont soudés aux bandes collectrices.

La feuille thermoplastique portant le réseau chauffant peut être une feuille intercalaire d'un vitrage feuilleté. Dans ce cas, son assemblage avec les autres éléments du feuilleté, par exemple avec les feuilles de verre s'effectue de façon bien connue en soi.

La feuille thermoplastique portant le réseau chauffant peut être aussi une feuille rigide de polycarbonate ou en polyméthacrylate par exemple, la pose du réseau de fils s'effectuant de la même façon. Dans ce cas, elle peut constituer elle-même le vitrage chauffant.

Selon une variante du fonctionnement du dispositif décrit en relation avec la figure 7, la vis-mère 43 reste immobile à la fin des courses successives, de sorte que le plateau, donc le centre 0 des arcs de cercle est maintenu fixe pendant toute l'opération de pose. C'est au contraire le moteur 56 qui avance d'un pas, diminuant ainsi le rayon utile de la bielle d'une distance correspondant à l'écartement des brins successifs. Il en résulte donc qu'au fur et à mesure des allers et retours successifs du chariot, le fil est posé le long d'arcs de cercle de rayons décroissants.

Il est clair que de nombreuses modifications n'échappant pas à l'invention sont possibles et, par exemple, que l'on peut, en agissant simultanément sur les deux dispositifs d'avance, faire varier à la fois la position du centre et le rayon des arcs de cercle, ou encore, en supprimant l'oscillation des organes de pose sur le chariot, poser exactement les fils selon les directrices courbes.

Enfin, l'ensemble des déplacements programmés qui viennent d'être décrits pourraient être exécutés par une table traçante de précision à commande électronique.

La seule limitation rencontrée réside dans le fait que, sur les bords du réseau, les ondulations de fils sont couchées par rapport à la direction moyenne du tracé, d'un angle égal à la moitié de l'ouverture totale de l'arc de cercle correspondant.

Dans la quasi-totalité des cas rencontrés en pratique, il s'est avéré qu'une telle inclinaison n'est pas gênante. Il a été montré d'ailleurs qu'il était possible de la réduire en augmentant quelque peu en cas de besoin le rayon de courbure des directrices.

### Revendications

1. Vitrage monolithe ou feuilleté comprenant un réseau chauffant formé de fils métalliques très fins, pratiquement invisibles, frisés ou ondulés autour de directrices, incrustés dans une couche thermoplastique entre deux bandes collectrices, caractérisé en ce que les fils de résistance électrique sont disposés suivant des directrices en arcs de cercle, le réseau chauffant recouvrant la zone balayée par un essuie-glace équipant le vitrage.

2. Vitrage selon la revendication 1, caractérisé en ce que les directrices en arcs de cercle des fils sont toutes concentriques.

3. Vitrage selon la revendication 1, caractérisé en ce que les directrices en arcs de cercle des fils ont toutes des rayons égaux.

4. Dispositif pour la fabrication d'un réseau chauffant sur une feuille thermoplastique selon une des revendications 1 à 3, comprenant un plateau support pour la feuille, un pont supportant un chariot coulissant porteur d'organes de pose du fil de résistance, des moyens pour animer le chariot d'un mouvement de va-et-vient des glissières perpendiculaires au pont sur lesquelles peut coulisser librement le pont portant le chariot, caractérisé en ce qu'il comprend en outre une bielle reliant ledit chariot à un axe vertical situé dans le plan médian du plateau, et un mécanisme d'avance pas-à-pas, décalant le chariot et le plateau l'un par rapport à l'autre, des moyens procurant aux moyens de pose du fil un mouvement oscillant approximativement perpendiculaire au mouvement de va-et-vient le long du pont.

5. Dispositif selon la revendication 4, caractérisé en ce que la bielle reliant ledit chariot à l'axe vertical fixe est réglable en longueur.

6. Dispositif selon une des revendications 5, caractérisé en ce qu'il comporte un mécanisme d'avance pas-à-pas du plateau en même temps qu'un mécanisme réglant la longueur de la bielle à chaque va-et-vient du chariot.

### Claims

1. A monolithic or laminated pane comprising a heating network formed of very thin metal vires, practically invisible, waving or undulating about directrices, characterised in that the electric resistance wires are deposited along directrices shaped as arcs of a circle, the heating network covering the zone swept by a windscreen wiper with which the pane is provived.

2. A pane according to claim 1, characterised in that the directrices shaped as arcs of circle of the wires are all concentric.

3. A pane according to claim 1, characterised in that the directrices shaped as arcs of a circle all have the same radii.

4. Device for making a heating network on a thermoplastic sheet according to one of claims 1 to 3, comprising a support plate for the sheet, a bridge supporting a sliding carriage carrying members for positionning the resistance wire, means for driving the carriage in to-and-fro movement, and sliders perpendicular to the bridge on which the bridge carrying the carriage can slide freely, characterised in that it comprises a link rod connecting said carriage to a vertical axis situated in the median plane of the plate, a step-by-step advance mechanism moving the carriage relative to the plate, and means for causing the means for positionning the wire to oscillate approximately perpendicularly to the to and fro movement along the bridge.

5. Device according to claim 4, characterised in that the link fod connecting said carriage to the fixed vertical axis is adjustable in length.

6. Device according to claim 5, characterised in that it comprises a mechanism for step-by-step advance of the plate and a mechanism adjusting the length of the link rod on each to-and-fro movement of the carriage at the same time.

### Patentansprüche

1. Einschichtige oder mehrschichtige Verglasung mit einem Heiznetz aus sehr dünnen, praktisch unsichtbaren, um Leitkurven herum gekräuselten oder gewellten Metalldrähten, dadurch gekennzeichnet, daß die elektrischen Widerstandsdrähte entlang von kreisbogenförmigen Leitkurven angeordnet sind und das Heiznetz die von einem der Verglasung zugeordneten Scheibenwischer überstrichene Zone bedeckt.

2. Verglasung nach Anspruch 1, dadurch gekennzeichnet, daß alle kreisbogenförmigen Leitkurven für die Drähte konzentrisch sind.

3. Verglasung nach Anspruch 1, dadurch gekennzeichnet, daß alle kreisbogenförmigen Leitkurven für die Drähte den gleichen Radius aufweisen.

4. Vorrichtung für die Herstellung eines Heiznetzes auf einer thermoplastischen Folie nach einem der Ansprüche 1 bis 3, mit einer Tragplatte für die Folie, einer einen verfahrbaren, mit Ablegevorrichtungen für den Widerstandsdraht versehen Schlitten tragenden Brücke, Antriebseinrichtungen für eine Hin- und Herbewegung des Schlittens und senkrecht zur Brücke angeordneten Gleitschienen, auf denen die den Schlitten tragende Brücke frei gleiten kann, dadurch gekennzeichnet, daß sie darüber hinaus eine den Schlitten mit einer vertikalen, in der Mittelebene der Platte angeordneten Achse verbindende Kurbelstange, eine mechanische, den Schlitten und die Platte relativ zueinander verschiebende Einrichtung zur schrittweisen Vorwärtsbewegung, sowie Einrichtungen umfaßt, die den Ablegevorrichtungen für den Draht eine oszillierende, annähernd senkrecht zu der Hin- und Herbewegung entlang der Brücke verlaufende Bewegung erteilen.

5. Vorrichtung nach Anspruch 4, dadurch gekennzeichnet, daß die den Schlitten mit der vertikalen fest angeordneten Achse verbindende Kurbelstange in ihrer Länge einstellbar ist.

6. Vorrichtung nach Anspruch 5, dadurch gekennzeichnet, daß sie eine mechanische Einrichtung zu schrittweisen Vorwärtsbewegung der Platte und gleichzeitig eine mechanische Einrichtung umfaßt, die die Länge der Kurbelstange bei jeder Hin- und Herbewegung des Schlittens verändert.

FIG_1

FIG_2

1

## FIG. 3

## FIG. 4

27

31

33a

30    32    28    29

0

## FIG_5

34

38a

35

38b

37    36

0

## FIG_6

FIG.7